# EUROPEAN PATENT APPLICATION

(11) **EP 4 633 192 A1**
(43) Date of publication of application: **15.10.2025**
(21) Application number: 25158872.9
(22) Date of filing: 19.02.2025
(51) Int. Cl.: H04R 1/10, H04R 3/00, G10K 11/178, G10L 21/0208, G10L 21/0272, G10L 21/028, H04R 25/00

(54) **CONTROLLING OUTPUT OF AUDIO DATA**

(30) Priority: 25.03.2024 GB 202404205
(71) Applicant: Nokia Technologies Oy, 02610 Espoo (FI)
(72) Inventor: VILERMO, Miikka Tapani, Siuro (FI); LEHTINIEMI, Arto Juhani, Lempäälä (FI)
(74) Representative: Nokia EPO representatives

(57) **Abstract**

Example embodiments relate to an apparatus, method and computer-program product relating to controlling output of audio data. An example method is disclosed, comprising outputting a first set of audio data via one or more loudspeakers, capturing, via one or more microphones, a real-world audio scene to provide a second set of audio data for output via the one or more loudspeakers and identifying which of the first set of audio data and at least part of the real-world audio scene has the auditory attention of the user based on a measured neural activity of the user. The method may also comprise controlling output of at least some of the first and/or second set of audio data via the one or more loudspeakers based on the identification.

## Description

### Field

Various example embodiments relate to controlling output of audio data, for example audio data based on a measured neural activity of a user.

### Background

A user may be interested in different sources of audio at different times. For example, the user may be listening to an audio track via loudspeakers of an earphones device but, at one or more times, may also be aware of real-world audio sounds around them that they may wish to listen to, at least temporarily, instead of the audio track. It may be useful to know which audio has the user's auditory attention at a given time.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus, comprising: means for outputting a first set of audio data via one or more loudspeakers of the apparatus; means for capturing, via one or more microphones of the apparatus, a real-world audio scene which is external to the apparatus to provide a second set of audio data for output via the one or more loudspeakers; means for identifying which of the first set of audio data and at least part of the real-world audio scene has the auditory attention of a user based on a measured neural activity of the user; and means for controlling output of at least some of the first and/or second set of audio data via the one or more loudspeakers based on the identification.

In some example embodiments, the first set of audio data may represent an audio track or communications session received from a user device associated with the apparatus.

In some example embodiments, in response to identifying that the first set of audio data has the auditory attention of the user, the means for controlling output may be configured to disable or attenuate output of the second set of audio data via the one or more loudspeakers.

In some example embodiments, the apparatus may further comprise: means for generating a noise cancelling signal based on the captured real-world audio scene, wherein the means for controlling output is configured, in further response to identifying that the first set of audio data has the auditory attention of the user, to enable or increase a gain associated with the noise cancelling signal for output to the one or more loudspeakers.

In some example embodiments, the first set of audio data may represent a plurality of audio sources, wherein the means for identifying may be configured to identify that a first audio source of the plurality of audio sources has the auditory attention of the user; and the means for controlling output may be configured to amplify the first audio source relative to the other audio source(s).

In some example embodiments, in response to identifying that at least part of the real-world audio scene has the auditory attention of the user, the means for controlling output may be configured to disable or decrease a gain associated with the first set of audio data.

In some example embodiments, in response to identifying that at least part of the real-world scene has the auditory attention of the user, the means for controlling output may be configured to enable or increase a gain associated with the at least some of the second set of audio data for output to the one or more loudspeakers.

In some example embodiments, the means for controlling output may be configured, in further response to identifying that at least part of the real-world audio scene has the auditory attention of the user, to disable or decrease a gain associated with the noise cancelling signal for output to the one or more loudspeakers.

In some example embodiments, the real-world audio scene may comprise a plurality of real-world audio sources, the means for identifying may be configured to identify that a first real-world audio source of the plurality of real-world audio sources has the auditory attention of the user, and the apparatus may further comprise means for steering a sound capture beam of the one or more microphones towards a direction of the first real-world audio source such that audio signals of the first-world audio source are output to the one or more loudspeakers with a higher gain than those of other real-world audio source(s).

In some example embodiments, the apparatus may further comprise means for dividing the second set of audio data into a plurality of frequency sub-bands, wherein, the means for identifying may be configured to identify that a first frequency sub-band of the plurality of frequency sub-bands has the auditory attention of the user, and the means for controlling output may be configured to amplify output of the first frequency sub-band with a higher gain than for the other frequency sub-bands.

In some example embodiments, the means for controlling output may be configured, in further response to identifying that the real-world audio scene has the auditory attention of the user, to disable or decrease the gain associated with the noise cancelling signal corresponding to the first frequency sub-band. In some example embodiments, the first frequency sub-band may correspond to speech audio.

In some example embodiments, the apparatus may further comprise means for measuring the neural activity of the user. In some example embodiments, the apparatus may be comprised by an earphones device.

In some example embodiments, the apparatus may comprise an active noise cancelling function operable in a transparency mode for outputting the at least some of the second set of audio data via the one or more loudspeakers, and the means for controlling output of the at least some of the second set of audio data may be configured at least to enable, or control a gain associated with, at least the transparency mode.

According to a second aspect, there is described a method, comprising: outputting a first set of audio data via one or more loudspeakers; capturing, via one or more microphones, a real-world audio scene to provide a second set of audio data for output via the one or more loudspeakers; identifying which of the first set of audio data and at least part of the real-world audio scene has the auditory attention of a user based on a measured neural activity of the user; and controlling output of at least some of the first and/or second set of audio data via the one or more loudspeakers based on the identification.

In some example embodiments, the first set of audio data may represent an audio track or communications session received from a user device.

In some example embodiments, in response to identifying that the first set of audio data has the auditory attention of the user, the controlling may comprise disabling or attenuating output of the second set of audio data via the one or more loudspeakers.

In some example embodiments, the method may further comprise generating a noise cancelling signal based on the captured real-world audio scene, wherein in further response to identifying that the first set of audio data has the auditory attention of the user, the controlling comprises enabling or increasing a gain associated with the noise cancelling signal for output to the one or more loudspeakers.

In some example embodiments, the first set of audio data may represent a plurality of audio sources; a first audio source of the plurality of audio sources may be identified as the auditory attention of the user, and the first audio source may be amplified relative to the other audio source(s).

In some example embodiments, in response to identifying that at least part of the real-world audio scene has the auditory attention of the user, the output may be controlled to disable or decrease a gain associated with the first set of audio data.

In some example embodiments, in response to identifying that at least part of the real-world scene has the auditory attention of the user, the output may be controlled to enable or increase a gain associated with the at least some of the second set of audio data for output to the one or more loudspeakers.

In some example embodiments, in further response to identifying that at least part of the real-world audio scene has the auditory attention of the user, the output may be controlled to disable or decrease a gain associated with the noise cancelling signal for output to the one or more loudspeakers.

In some example embodiments, the real-world audio scene may comprise a plurality of real-world audio sources, a first real-world audio source of the plurality of real-world audio sources may be identified as having the auditory attention of the user, and the method may further comprise steering a sound capture beam of the one or more microphones towards a direction of the first real-world audio source such that audio signals of the first-world audio source are output to the one or more loudspeakers with a higher gain than those of other real-world audio source(s).

In some example embodiments, the method may further comprise dividing the second set of audio data into a plurality of frequency sub-bands, wherein, a first frequency sub-band of the plurality of frequency sub-bands may be identified as having the auditory attention of the user, and the output may be controlled to amplify output of the first frequency sub-band with a higher gain than for the other frequency sub-bands.

In some example embodiments, in further response to identifying that the real-world audio scene has the auditory attention of the user, the output may be controlled to disable or decrease the gain associated with the noise cancelling signal corresponding to the first frequency sub-band. In some example embodiments, the first frequency sub-band may correspond to speech audio.

In some example embodiments, the method may further comprise measuring the neural activity of the user. In some example embodiments, the method may be performed by an earphones device.

In some example embodiments, the method may be performed using an active noise cancelling function operable in a transparency mode for outputting the at least some of the second set of audio data via the one or more loudspeakers, and controlling output of the at least some of the second set of audio data may be configured at least to enable, or control a gain associated with, at least the transparency mode.

According to a third aspect, there is described a computer program product, comprising a set of instructions which, when executed on an apparatus, is configured to cause the apparatus to carry out a method, comprising: outputting a first set of audio data via one or more loudspeakers; capturing, via one or more microphones, a real-world audio scene to provide a second set of audio data for output via the one or more loudspeakers; identifying which of the first set of audio data and at least part of the real-world audio scene has the auditory attention of a user based on a measured neural activity of the user; and controlling output of at least some of the first and/or second set of audio data via the one or more loudspeakers based on the identification.

In some example embodiments, the third aspect may include any other feature mentioned with respect to the method of the second aspect.

According to a fourth aspect, there is described an apparatus comprising at least one processing core, at least one memory including computer program code, the at least one memory and the computer program code being configured to, with the at least one processing core, cause the apparatus to: output a first set of audio data via one or more loudspeakers; capture, via one or more microphones, a real-world audio scene to provide a second set of audio data for output via the one or more loudspeakers; identify which of the first set of audio data and at least part of the real-world audio scene has the auditory attention of a user based on a measured neural activity of the user; and control output of at least some of the first and/or second set of audio data via the one or more loudspeakers based on the identification.

In some example embodiments, the fourth aspect may include any other feature mentioned with respect to the method of the second aspect.

### Drawings

Example embodiments will be described, by way of non-limiting example, with reference to the accompanying drawings, in which:
FIG. 1 illustrates a system useful for understanding example embodiments;
FIG. 2A illustrates a side view of an earphones device that may comprise part of the FIG. 1 system;
FIG. 2B illustrates the FIG. 2A earphones device when located on a user's ear;
FIG. 3 illustrates a model for identifying auditory attention of a user in accordance with some example embodiments;
FIG. 4 is a flow diagram illustrating operations that may be performed in accordance with some example embodiments;
FIG. 5 illustrates a front view of a user when listening to a first set of audio data via an earphones device;
FIG. 6 is a block diagram of a processing system in accordance with some example embodiments;
FIG. 7 is a block diagram of a noise cancellation system in accordance with some example embodiments;
FIG. 8A illustrates a front view of a user wherein a particular audio source of a real-world audio scene is amplified;
FIG. 8B illustrates the FIG. 8A user wherein microphone beamforming is used to amplify the particular audio source;
FIG. 9 is a block diagram of an apparatus that may be configured in accordance with one or more example embodiments; and
FIG. 10 illustrates a non-transitory computer readable medium in accordance with one or more example embodiments.

### Detailed Description

Disclosed herein are various example embodiments relating to controlling output of audio data based on a measured neural activity of a user.

Different sets of audio data may represent different types of audio scene. For example, a first set of audio data may be output via one or more loudspeakers and may represent an audio track or part of a communications session. The first set of audio data may be stored at, or streamed to, a user device that is connected to the one or more loudspeakers, which may be loudspeakers of an earphones device. For example, a second type of audio scene may comprise a real-world audio scene which surrounds the user. The real-world audio scene may comprise one or more audio sources. At least part of the real-world audio scene may be captured via one or more microphones, for example one or more microphones of the earphones device, to provide a second set of audio data.

As will be appreciated, some audio output devices, particularly earphones devices, provide an active noise cancellation (ANC) system. The ANC system may operate in two main modes, namely an ANC mode and a transparency (or pass-through) mode. In the ANC mode, at least some of the second set of audio data may be processed to provide a noise cancelling signal which may be output via the one or more loudspeakers for cancelling, or at least attenuating, surrounding real-world audio. The cancellation signal may be generated using known ANC algorithms based at least in part on the second set of audio data. Thus, the user will hear the first set of audio data in an improved way because less of the real-world audio will be heard. Generally speaking, the noise cancelling signal is mostly required to cancel lower audio frequencies because the physical structure of earphones devices may be capable of acoustically blocking or attenuating higher audio frequencies. In the transparency mode, the ANC mode may be disabled and at least some of the second set of audio data may be output via the one or more loudspeakers. Thus, the user will hear at least some of the real-world audio around them, although they may still hear at least some of the first set of audio data which may be output at the same time. The transparency mode is sometimes used when, for example, the user wishes to hear and/or converse with another person in proximity without having to pause playback of the first set of audio data or remove the earphones device.

The first and second sets of audio data may represent respective audio scenes which may comprise one, or a plurality of, audio sources. An audio source may comprise any entity that emits audio, i.e., an audible sound. An audio source may therefore comprise a person, animal, musical instrument, a loudspeaker, a vehicle, weather or other ambient sounds. Such examples are not intended to be limiting.

Example embodiments may involve controlling output of at least some of the second set of audio data based on the measured neural activity of the user. Example embodiments may for example involve identifying which of the first set of audio data and at least part of the real-world audio scene has the auditory attention of the user based on the measured neural activity of the user. Said identification may control output of said at least some of the second set of audio data, for example in accordance with examples to be described below. Additionally, or alternatively, example embodiments may involve controlling output of at least some of the first set of audio data based on the measured neural activity of the user, for example by attenuating output of the first set of audio data if it is identified that at least part of the real-world audio scene has the auditory attention of the user.

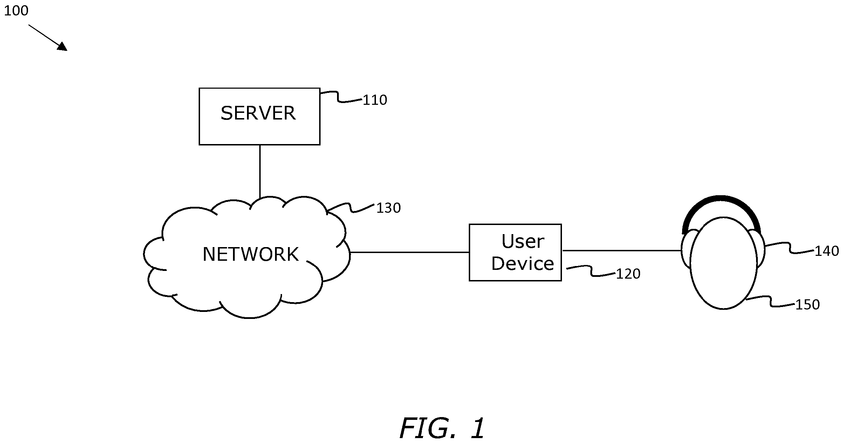

FIG. 1 is a block diagram of a system 100 which may be useful for understanding example embodiments.

The system 100 may comprise a server 110, a user device 120, a network 130 and an audio output device comprising, in this example, an earphones device 140 worn by a user 150.

The earphones device 140 may comprise any form of head or ear -worn audio output device, such as a pair of earphones, earbuds, headphones or an extended reality (XR) headset. In such cases, audio data may be output to left and right - hand loudspeakers thereof using monaural, stereo or (in the case of spatial audio data) binaural rendering.

The server 110 may be connected to the user device 120 by means of the network 130 for sending audio data to the user device. The server 110 may for example comprise an internet protocol (IP) telecommunications server which transmits audio data comprising part of a communications session voice to the user device 120. The communications session may, for example, comprise a voice call or conference call which may involve one or more participants other than the user 150. The audio data may comprise spatial audio data encoded with a spatial percept such that, when decoded and output to the earphones device 140, the one or more participants will be perceived at different respective positions with respect to the user 150 in the resulting audio scene. Example formats for spatial audio data may include, but are not limited to, multi-channel mixes, Ambisonics, parametric spatial audio (e.g., metadata-assisted spatial audio (MASA)), object-based audio, or any combination thereof. The spatial audio data may be encoded and decoded using a codec which may comprise, but is not limited to, the 3GPP Immersive Video and Audio Services (IVAS) format.

Transmission may be by means of any suitable streaming data protocol.

Alternatively, or additionally, the server 110 may provide one or more files including audio data to the user device 120 for storage and processing thereat. The audio data may for example represent a music track or audio associated with a video clip or movie.

At the user device 120, the audio data may be processed, rendered and output to the earphones device 140. Alternatively, the audio data may be processed and rendered by the earphones device 140, for example in the case that the earphones device 140 comprises part of an extended reality (XR) headset and hence has suitable processing capabilities.

In some example embodiments, the user device 120 may comprise one of, but is not limited to, a mobile telephone, a tablet computer, a games console, a laptop computer, a personal computer, a vehicle navigation computer, or wearable device. The user device 120 may communicate with the earphones device 140 by means of a short-range communications channel such as Bluetooth, Zigbee, WiFi, or similar. The user device 120 may also comprise one or more cameras.

The network 130 may be any suitable data communications network including, for example, one or more of a radio access network (RAN) whereby communication with the user device 120 is via one or more base stations, a WiFi network whereby communications is via one or more access points, or a short-range network such as one using the Bluetooth or Zigbee protocol.

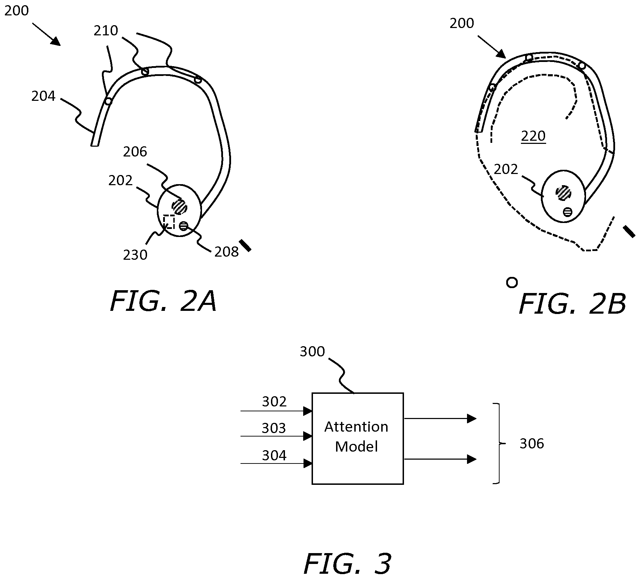

FIG. 2 illustrates a first earphone 200 of the earphones device 140. It will be appreciated that a second earphone (not shown) of the earphones device may comprise the same or similar features.

The first earphone 200 may comprise a first portion 202 and a second portion 204.

The first portion 202 may comprise a body which carries a loudspeaker 206 which, in use, locates over, adjacent or partly within a user's ear canal. The first portion 202 may carry one or more microphones 208 for capturing audio external to the user 150. For example, audio captured by the microphone 208 may be processed as part of an active noise cancellation (ANC) function. The microphone 208 may be termed an external microphone given its location and its captured audio may be used as part of a feed-forward ANC algorithm. Although not shown, the first portion 202 may also carry one or more other "internal" microphones which are proximate the loudspeaker 206 and may be used as part of a feed-back ANC algorithm, although the feed-forward case will be the focus of the following description.

The first portion 202 may also comprise a processing module 230 which may be configured to perform various operations to be described below. The processing module 230 may also provide the above-described ANC function and may be configured to provide ANC and transparency modes of operation. Alternatively, a separate processing module may provide the ANC function.

The first portion 202 may also comprise one or more radio transceivers for communication with the user device 120.

The second portion 204 may comprise a curvilinear arm which extends from the first portion 202 and locates, in use, around an outer portion of a user's ear 220, as shown in FIG. 2B.

The second portion 204 may comprise one or more sensors 210 which contact respective parts of the user's skin, located behind the ear 220. Alternatively, or additionally, the first portion 202 may comprise one or more sensors which contact respective parts of the user's skin and/or which locate and make contact within the user's ear canal.

The one or more sensors 210 may sense or pick-up biosignals (sometimes referred to as bioelectrical signals) produced by the user's brain during some form of activity. In example embodiments, the activity may comprise listening to audio data when output via the loudspeaker 206 or listening to a real-world audio scene whilst capturing at least part of that real-world audio scene.

Biosignals may comprise signals produced by living beings that can be measured and monitored. Such biosignals may, for example, represent the change in electric current produced by a sum of an electrical potential difference across a particular tissue, organ or cell system. For example, so-called Electroencephalography (EEG) signals may be picked-up by the one or more sensors 210 to provide an electrogram of electrical activity of the user's brain in a non-invasive way.

The biosignals picked-up by the one or more sensors 210 may be provided to the processing module 230.

Alternatively, the processing module 230 may be provided at the user device 120 in which case the picked-up biosignals may be transmitted by the first earphone 200 to the user device.

Biosignals may also be picked-up by one or more sensors of a second earphone (not shown) which biosignals may be transmitted to the first earphone 200 (or to the user device 120) which comprises the processing module 230.

The processing module 230 may comprise, or be configured to access, a machine learning (ML) model.

FIG. 3 illustrates an example ML model 300. The ML model 300 may be referred to as an attention model in the sense that it is configured to identify or estimate which audio, internal or external, has the user's current attention. The ML model 300 may comprise, but is not limited to, an artificial neural network (ANN). There are various known types of ANN, including feed-forward neural networks, perceptron neural networks, convolutional neural networks, recurrent neural networks, deep neural networks, and so on. Each type may be more appropriate for a particular application or task.

According to some example embodiments, the ML model 300 may be configured to receive the picked-up biosignals as a first input 302, which may be digitized and possibly pre-processed, for measuring neural activity of the user 150 during output and/or capture of at least part of an audio scene. The ML model 300 also be configured to receive, as a second input 303, the abovementioned first set of audio data which may represent at least part of an audio track or communications session that is being played via the loudspeaker 206. The ML model 300 may also be configured to receive, as a third input 304, the abovementioned second set of audio data which is that captured by the one or more microphones 208 during output of the first set of audio data.

The ML model 300 may be configured, based on the received first, second and third inputs 302, 303, 304 to identify, or classify, which of the first audio data and the real-world audio (represented by the second set of audio data) has the auditory attention of the user 150 at a given time or over a given time window. In other words, which of the internal or external real-world audio is the user 150 currently listening to, based on picked-up biosignals. For example, the ML model 300 may be configured in accordance with a so-called auditory attention inference system described in Haghighi M, Moghadamfalahi M, Akcakaya M, Erdogmus D. EEG-assisted Modulation of Sound Sources in the Auditory Scene. Biomed Signal Process Control. 2018 Jan; 39: 263-270. For example, the ML model 300 may determine, or be informed of, one or more audio signals from respective internal audio sources in the first set of audio data and, from the second set of audio data, one or more audio signals from respective external (real-world) audio sources. For each of the internal and external audio sources, the ML model 300 may produce respective probability values indicative of the probability or likelihood that a particular audio source has the user's current attention. The respective probability values, or the highest probability value, may be provided as one or more sets of output data 306.

For example, the ML model 300 may be trained using supervised or unsupervised learning methods. Supervised learning methods may involve measuring the user's biosignals when the user 150 is instructed to give auditory attention to audio associated with each of a number of different audio sources, for example in turn, and/or to audio sources which have different respective positions with respect to the user.

For example, another method for identifying that a particular audio source has the user's attention is to track and/or cross-correlate a user's biosignals with respective audio signals for the internal and external audio sources to identify a closest match.

It follows from the above that it is possible to identify, or at least estimate, whether the user 150 is attending (listening) to either the first set of audio data or at least part of the real-world scene represented by the second set of audio data.

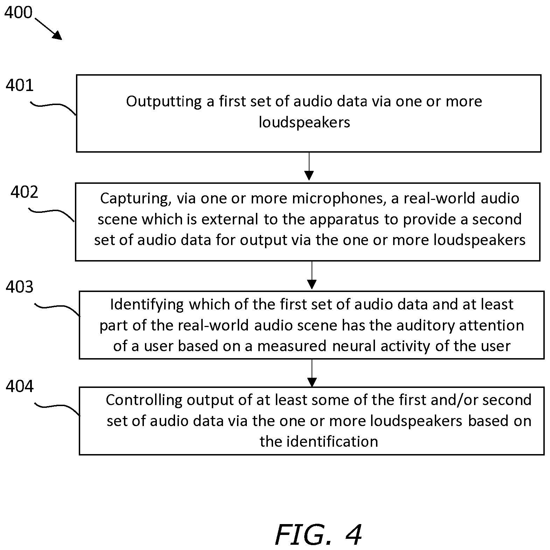

FIG. 4 is a flow diagram showing operations 400 according to one or more example embodiments. The operations 400 may be performed in hardware, software, firmware or a combination thereof. For example, the operations 400 may be performed individually, or collectively, by a means, wherein the means may comprise at least one processor and at least one memory storing instructions that, when executed by the at least one processor, cause the performance of the operations. The operations 400 may, for example, be performed by the processing module 230 which may be provided in the earphones device 140 or in the user device 120.

A first operation 401 may comprise outputting a first set of audio data via one or more loudspeakers.

A second operation 402 may comprise capturing, via one or more microphones, a real-world audio scene which is external to the apparatus to provide a second set of audio data for output via the one or more loudspeakers.

A third operation 403 may comprise identifying which of the first set of audio data and at least part of the real-world audio scene has the auditory attention of a user based on a measured neural activity of the user.

A fourth operation 404 may comprise controlling output of at least some of the first and/or second set of audio data via the one or more loudspeakers based on the identification.

In some example embodiments, the first set of audio data may represent an audio track or communications session received from a user device.

Another operation may comprise measuring the neural activity of the user. This may be performed using one or more ML models and/or using tracking and/or cross-correlation methods as described above.

The fourth operation 404 may comprise one or more different controlling options which will now be described with reference to particular examples.

References to the second set of audio data used herein may include modified versions of the second set of audio data such amplified or filtered versions of the second set of audio data.

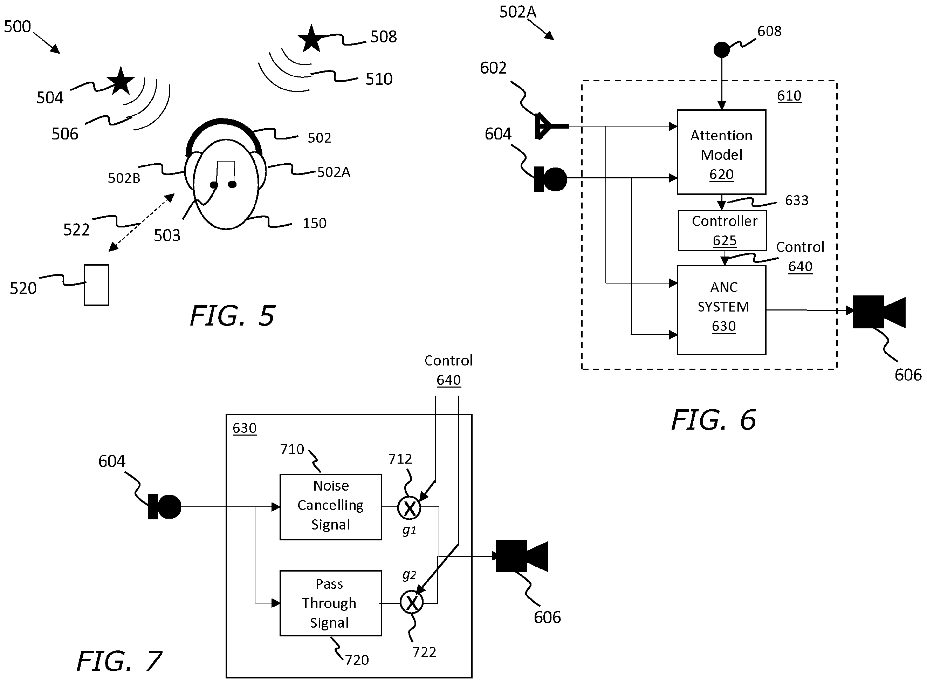

FIG. 5 illustrates a scenario in which the user 150 listens to a first set of audio data via an earphones device 502.

The earphones device 502 may comprise first and second earphones 502A, 502B, each being the same, or similar to, the FIG. 2 first earphone 200, and at least one of which may comprise a processing module 230 as described above.

The first set of audio data may be received from a user device 520 via a wireless link 522, for example a Bluetooth channel. The first set of audio data is decoded and output via respective loudspeakers of the first and second earphones 502A, 502B.

In proximity to the user 150 are first and second (external) real-world audio sources 504, 508 which emit respective first and second audio signals 506, 510.

For example, the first audio source 504 may comprise a person and the first audio signal 506 may represent speech. For example, the second audio source 508 may comprise an ambient sound source and the second audio signal 510 may represent ambient sounds. The first and second earphones 502A, 502B may capture the first and second audio signals 506, 510 via respective one or more microphones for generating a second set of audio data.

FIG. 6 illustrates components of the first earphone 502A according to an example embodiment. The first earphone 502A may comprise an antenna 602, one or more microphones 604, one or more loudspeakers 606, one or more sensors 608 and a processing module 610.

The antenna 602 may be configured for communications with the user device 520 in FIG. 5. The antenna 602 may for example comprise a Bluetooth antenna or similar. In other example embodiments, the user terminal 520 may communicate with the first earphone 502A (and the second earphone 502B) via a wired connection in which case the antenna 602 may not be required.

The processing module 610 may comprise an attention model 620, which may be configured the same or similar to that described in relation to FIG. 3, a controller 625 and an ANC system 630. The ANC system 630 may be operable in ANC and transparency modes.

In operation, the first set of audio data may be received via the antenna 602. The first set of audio data may be provided as input to both the attention model 620 and to the ANC system 630. The first and second audio signals 506, 510 may be captured by the one or more microphones 604, converted via an analogue-to-digital convertor (ANC) (not shown) to a second set of audio data, and provided as input to both the attention model 620 and to the ANC system 630. The one or more sensors 608 may pick-up biosignals of the user 150 and provide these as input to the attention model 620.

The user 150 may at a first time be listening to the audio track 503, in other words the first set of audio data. The attention model 620 may identify that the first set of audio data has the auditory attention of the user 150, for example based on determining a higher attention probability for the first set of audio data than for the second set of audio data. The attention model 620 may signal this identification via one or more sets of output data 633, e.g., one or more probability values, which are input to the controller 625.

The controller 625 may be configured in accordance with the fourth operation 404 to control the ANC system 630 using the one or more control signals 640. The controller 625 may for example output one or more control signals 640 to cause the ANC system 630 to output of at least some of the second set of audio data via the one or more loudspeakers 606. In this sense, controlling output may include not outputting the second set of audio data, outputting at least some of the second set of audio data or outputting all of the second set of audio data.

For example, responsive to identifying that the first set of audio data has the auditory attention of the user 150, the controller 625 may control the ANC system 630 to disable or attenuate output of the second set of audio data via the one or more loudspeakers 606. One way of doing this is to disable the transparency mode or reduce a gain associated with the transparency mode to zero or reduce it towards zero. In some example embodiments, the controller 625 may at substantially the same time control the ANC system 630 to enable or increase a gain associated with the noise cancelling signal for output to the one or more loudspeakers 606, for example by increasing the gain to a maximum level, or increasing the gain towards the maximum level.

The user 150 may at a second, later time, be attempting to listen to external audio, for example the first audio signal 506 (e.g., speech) from the first audio source 504 (e.g., a person). The attention model 620 may identify that part of the real-world audio scene has the auditory attention of the user 150, for example based on determining a higher attention probability for the second set of audio data than for the first set of audio data. The attention model 620 may signal this identification via one or more sets of output data 633 which are input to the controller 625.

For example, responsive to identifying that part of the real-world audio scene has the auditory attention of the user 150, the controller 625 may control the ANC system 630
to enable or increase a gain associated with the transparency mode to the maximum level, or increase the gain towards the maximum level. In some example embodiments, the controller 625 may at substantially the same time control the ANC system 630 to disable or decrease the gain associated with the noise cancelling signal, for example by decreasing the gain to a zero level, or decreasing the gain towards the zero level. Additionally, or alternatively, for example in an alternative embodiment where no ANC system 630 is provided, the controller 625 may disable or reduce a gain associated with the first set of audio data. In this way, output of the first set of audio data is attenuated such that the user 150 will hear the real-world audio scene.

FIG. 7 illustrates an example form of the ANC system 630 which may comprise an adapted form of a conventional ANC system.

The ANC system 630 may be configured to receive the second set of audio data from the one or more microphones 604 and, via a first module 710, generate the noise cancelling signal, and, via a second module 720, generate a so-called pass-through signal, both for output via the one or more loudspeakers 606.

The pass-through signal may comprise the second set of audio data or a modified version of the second set of audio data, for example a filtered or post-processed version of the second set of audio data. References to the second set of audio data used herein may include such modified versions of the second set of audio data in this context.

Associated with each of the first and second modules 710, 720 are respective first and second mixers 712, 722 for controlling respective first and second gains *g1, g2* associated with the noise cancelling signal and the pass-through signal. The controller 625 may be configured such that the one or more control signals 640 control the respective first and second gains *g1, g2.* For example, the first and second gains *g1, g2* may be controlled in an opposite manner, such that one increases as the other decreases.

For example, if the attention model 620 identifies that the first set of audio data has the auditory attention of the user 150, the first gain *g1* may be set to, or towards, a maximum level (e.g., one) and the second gain *g2* may be set to, or towards, zero or other minimum value.

For example, if the attention model 620 identifies that part of the real-world audio scene has the auditory attention of the user 150, the first gain *g1* may be set to, or towards, zero or other minimum value and the second gain *g2* may be set to, or towards, a maximum level (e.g., one).

In some example embodiments, the first set of audio data may represent a plurality of audio sources.

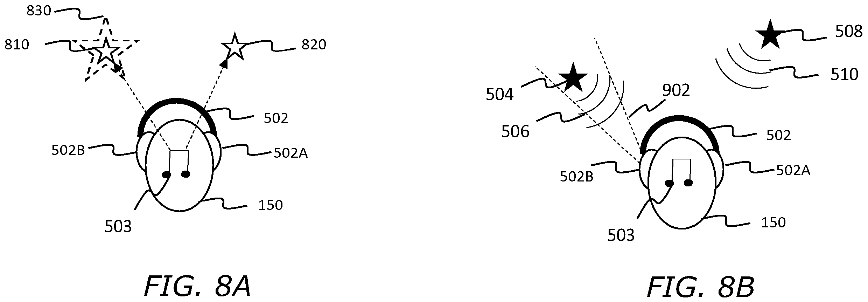

Referring to FIG. 8A, for example, the first set of audio data may represent first and second participants 810, 820 of a communications session which may be output at different respective positions with respect to the user 150. The first and second participants 810, 820 may be represented in the first set of audio data as respective spatial audio objects that the attention model 620 can distinguish between.

If the attention model 620 identifies that the first participant 810 has the auditory attention of the user 150, the controller 625 may, in addition to the above operations for the case that the first set of audio data has the auditory attention of the user, cause a gain associated with audio of the first participant 810 to be increased such that it will be heard louder than audio of the second participant 820, as indicated by the dashed line 830. The controller 625 may communicate with the user device 520 for this purpose, or may control the gain itself.

In some example embodiments, where the second set of audio data represents a plurality of external real-world audio sources, such as the first and second audio sources 504, 508 shown in FIG. 5, the attention model 620 may identify that a particular real-world audio source has the auditory attention of the user 150. This may be achieved where the one or more external microphones comprise a microphone array which enables audio signals from different directions to be captured and distinguished by the attention model 620.

FIG. 8B illustrates the situation where the first audio source (a person) 504 has the auditory attention of the user 150, in which case the controller 625 may, in addition to the above operations for the case that the second set of audio data has the auditory attention of the user, cause the one or more microphones to steer a sound capture beam 902 towards a direction of the first audio source 504 such that its audio signals will be amplified with a higher gain than that of the second audio source 508 or indeed any other external audio sources.

In some example embodiments, the second set of audio data may be divided into a plurality of frequency sub-bands.

The attention model 620 may identify that a first frequency sub-band (e.g., corresponding to speech audio) of the plurality of frequency sub-bands has the auditory attention of the user 150. For example, the attention model 620 may identify that the user 150 is listening to speech, which it knows corresponds to a frequency sub-band of approximately 400Hz - 4 kHz or 400Hz - 8 kHz for higher speech quality. The controller 625 may, in addition to the above operations for the case that the second set of audio data has the auditory attention of the user 150, cause amplified output of the first frequency sub-band with a higher gain than for the other frequency sub-bands. This may be performed by band-pass filtering the pass-through signal using the first frequency sub-band. In some example embodiments, the controller 625 may additionally disable or decrease the gain associated with the noise cancelling signal corresponding to the first frequency sub-band. This may involve band-stop filtering the noise cancelling signal using the first frequency sub-band. The controller 625 may communicate with the user device 520 for this purpose, or may control the gain internally.

Although example embodiments have been described in relation to controlling an ANC system 630, other example embodiments may simply involve controlling whether or not to output the second set of audio data via one or more loudspeakers.

Example embodiments therefore provide an improved and automated way of emphasizing output of audio signals based on which set of audio data the user 150 is listening to. The user 150 is not required to perform direct or conscious interaction. Example embodiments may also provide power savings by amplifying or passing through only the audio data which the user 150 is listening to.

### Example Apparatus

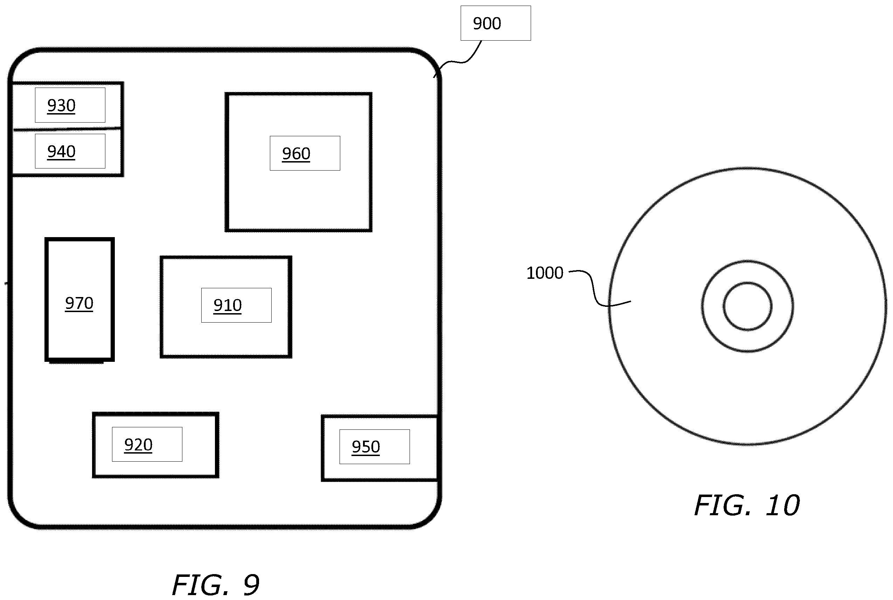

FIG. 9 illustrates an example apparatus 900 capable of supporting at least some embodiments. Illustrated is a device 900, which may comprise an earphones device, e.g., the first earphone 200, or the user device 120. Comprised in device 900 is a processor 910, which may comprise, for example, a single- or multi-core processor wherein a single-core processor comprises one processing core and a multi-core processor comprises more than one processing core. The processor 910 may comprise, in general, a control device. The processor 910 may comprise more than one processor. The processor 910 may be a control device. A processing core may comprise, for example, a Cortex-A8 processing core manufactured by ARM Holdings or a Steamroller processing core produced by Advanced Micro Devices Corporation. The processor 910 may comprise at least one Qualcomm Snapdragon and/or Intel Atom processor. The processor 910 may comprise at least one Application-Specific Integrated Circuit, ASIC. The processor 910 may comprise at least one Field-Programmable Gate Array, FPGA. The processor 910 may be means for performing method steps in device 900. The processor 910 may be configured, at least in part by computer instructions, to perform actions.

A processor may comprise circuitry, or be constituted as circuitry or circuitries, the circuitry or circuitries being configured to perform phases of methods in accordance with
embodiments described herein. As used in this application, the term "circuitry" may refer to one or more or all of the following: (a) hardware-only circuit implementations, such as
implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, or a device configured to control the functioning thereof, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The device 900 may comprise a memory 920. The memory 920 may comprise random access memory and/or permanent memory. The memory 920 may comprise at least one RAM chip. The memory 920 may comprise solid-state, magnetic, optical and/or holographic memory, for example. The memory 920 may be at least in part accessible to processor 910. The memory 920 may be at least in part comprised in processor 910. The memory 920 may be means for storing information. The memory 920 may comprise computer instructions that processor 910 is configured to execute. When computer instructions configured to cause the processor 910 to perform certain actions are stored in the memory 920, and the device 900 overall is configured to run under the direction of the processor 910 using computer instructions from the memory 920, the processor 910 and/or its at least one processing core may be considered to be configured to perform said certain actions. The memory 920 may be at least in part comprised in the processor 910. The memory 920 may be at least in part external to the device 900 but accessible to the device 900.

The device 900 may comprise a transmitter 930. The device 900 may comprise a receiver 940. The transmitter 930 and the receiver 940 may be configured to transmit and receive, respectively, information in accordance with at least one cellular or non-cellular standard.

The transmitter 930 may comprise more than one transmitter. The receiver 940 may comprise more than one receiver. The transmitter 930 and/or the receiver 940 may be configured to operate in accordance with Global System for Mobile Communication, GSM, Wideband Code Division Multiple Access, WCDMA, 5G/NR, 5G-Advanced, i.e., NR Rel-18, 19 and beyond, Long Term Evolution, LTE, IS-95, Wireless Local Area Network, WLAN, Ethernet and/or Worldwide Interoperability for Microwave Access, WiMAX, standards, for example.

The device 900 may comprise a Near-Field Communication, NFC, transceiver 950. The NFC transceiver 950 may support at least one NFC technology, such as NFC, Bluetooth, Wibree or similar technologies.

The device 900 may comprise a User Interface, UI, 960. The UI 960 may comprise at least one of a display, a keyboard, a touchscreen, a vibrator arranged to signal to a user by causing device 900 to vibrate, a speaker and a microphone. A user may be able to operate the device 900 via the UI 960, for example to accept incoming telephone calls, to originate telephone calls or video calls, to browse the Internet, to manage digital files stored in memory 920 or on a cloud accessible via the transmitter 930 and the receiver 940, or via NFC transceiver 950, and/or to play games.

The device 900 may comprise or be arranged to accept a user identity module 970. The user identity module 970 may comprise, for example, a Subscriber Identity Module, SIM, card installable in device 900. The user identity module 970 may comprise information identifying a subscription of a user of device 900. The user identity module 970 may comprise cryptographic information usable to verify the identity of a user of device 900 and/or to facilitate encryption of communicated information and billing of the user of the device 900 for communication effected via device 900.

The processor 910 may be furnished with a transmitter arranged to output information from processor 910, via electrical leads internal to the device 900, to other devices comprised in the device 900. Such a transmitter may comprise a serial bus transmitter arranged to, for example, output information via at least one electrical lead to the memory 920 for storage therein. Alternatively to a serial bus, the transmitter may comprise a parallel bus transmitter.

Likewise, the processor 910 may comprise a receiver arranged to receive information in
The processor 910, via electrical leads internal to the device 900, from other devices comprised in the device 900. Such a receiver may comprise a serial bus receiver arranged to, for example, receive information via at least one electrical lead from the receiver 940 for processing in the processor 910. Alternatively to a serial bus, the receiver may comprise a parallel bus receiver.

The device 900 may comprise further devices not illustrated in Figure 9. For example, where the device 900 comprises a smartphone, it may comprise at least one digital camera. Some devices 900 may comprise a back-facing camera and a front-facing camera, wherein the back-facing camera may be intended for digital photography and the front-facing camera for video telephony. The device 900 may comprise a fingerprint sensor arranged to authenticate, at least in part, a user of the device 900. In some embodiments, the device 900 lacks at least one device described above. For example, some devices 900 may lack a NFC transceiver 950 and/or user identity module 970.

The processor 910, memory 920, transmitter 930, receiver 940, NFC transceiver 950, UI 960 and/or user identity module 970 may be interconnected by electrical leads internal to the device 900 in a multitude of different ways. For example, each of the aforementioned devices may be separately connected to a master bus internal to the device 900, to allow for the devices to exchange information. However, as the skilled person will appreciate, this is only one example and depending on the embodiment various ways of interconnecting at least two of the aforementioned devices may be selected without departing from the scope of the present invention.

Figure 10 shows a non-transitory media 1000 according to some embodiments. The non-transitory media 1000 is a computer readable storage medium. It may be e.g. a CD, a DVD, a USB stick, a blue ray disk, etc. The non-transitory media 1000 stores computer program instructions, causing an apparatus to perform the method of any preceding process for example as disclosed in relation to the flow diagrams in this specification and related features thereof.

The described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependant claims are mutually freely combinable unless otherwise explicitly stated. Furthermore, it is to be understood that the use of "a" or "an", that is, a singular form, throughout this document does not exclude a plurality.

## Claims

1. An apparatus, comprising:
means for outputting a first set of audio data via one or more loudspeakers of the apparatus;
means for capturing, via one or more microphones of the apparatus, a real-world audio scene which is external to the apparatus to provide a second set of audio data for output via the one or more loudspeakers;
means for identifying which of the first set of audio data and at least part of the real-world audio scene has the auditory attention of a user based on a measured neural activity of the user;
means for generating a noise cancelling signal based on the captured real-world audio scene;
means for controlling output of at least some of the first and/or second set of audio data via the one or more loudspeakers based on the identification; and
in response to identifying that the first set of audio data has the auditory attention of the user, the means for controlling output is configured to enable or increase a gain associated with the noise cancelling signal for output to the one or more loudspeakers.

2. The apparatus of claim 1, wherein
the first set of audio data represents an audio track or communications session received from a user device associated with the apparatus.

3. The apparatus of claim 1, wherein
the first set of audio data represents a plurality of audio sources;
the means for identifying is configured to identify that a first audio source of the plurality of audio sources has the auditory attention of the user; and
the means for controlling output is configured to amplify the first audio source relative to the other audio source(s).

4. The apparatus of any preceding claim, wherein
in response to identifying that at least part of the real-world audio scene has the auditory attention of the user, the means for controlling output is configured to disable or decrease a gain associated with the first set of audio data.

5. The apparatus of any preceding claim, wherein,
in response to identifying that at least part of the real-world scene has the auditory attention of the user, the means for controlling output is configured to enable or increase a gain associated with the at least some of the second set of audio data for output to the one or more loudspeakers.

6. The apparatus of claim 5, wherein
the means for controlling output is configured, in further response to identifying that at least part of the real-world audio scene has the auditory attention of the user, to disable or decrease a gain associated with the noise cancelling signal for output to the one or more loudspeakers.

7. The apparatus of claim 5 or claim 6, wherein
the real-world audio scene comprises a plurality of real-world audio sources,
the means for identifying is configured to identify that a first real-world audio source of the plurality of real-world audio sources has the auditory attention of the user, and
the apparatus further comprises means for steering a sound capture beam of the one or more microphones towards a direction of the first real-world audio source such that audio signals of the first-world audio source are output to the one or more loudspeakers with a higher gain than those of other real-world audio source(s).

8. The apparatus of any of claims 5 to 7, further comprising:
means for dividing the second set of audio data into a plurality of frequency sub-bands, wherein,
the means for identifying is configured to identify that a first frequency sub-band of the plurality of frequency sub-bands has the auditory attention of the user, and
the means for controlling output is configured to amplify output of the first frequency sub-band with a higher gain than for the other frequency sub-bands.

9. The apparatus of claim 8, wherein
the means for controlling output is configured, in further response to identifying that the real-world audio scene has the auditory attention of the user, to disable or decrease the gain associated with the noise cancelling signal corresponding to the first frequency sub-band.

10. The apparatus of claim 9, wherein the first frequency sub-band corresponds to speech audio.

11. The apparatus of any preceding claim, further comprising:
means for measuring the neural activity of the user.

12. The apparatus of any preceding claim, wherein
the apparatus is comprised by an earphones device.

13. The earphones device of claim 12, wherein
the apparatus comprises an active noise cancelling function operable in a transparency mode for outputting the at least some of the second set of audio data via the one or more loudspeakers, and
the means for controlling output of the at least some of the second set of audio data is configured at least to enable, or control a gain associated with, at least the transparency mode.

14. A method, comprising:
outputting a first set of audio data via one or more loudspeakers;
capturing, via one or more microphones, a real-world audio scene to provide a second set of audio data for output via the one or more loudspeakers;
identifying which of the first set of audio data and at least part of the real-world audio scene has the auditory attention of a user based on a measured neural activity of the user;
generate a noise cancelling signal based on the captured real-world audio scene, wherein;
controlling output of at least some of the first and/or second set of audio data via the one or more loudspeakers based on the identification; and
in response to identifying that the first set of audio data has the auditory attention of the user, controlling comprises enabling or increasing a gain associated with the noise cancelling signal for output to the one or more loudspeakers.

15. A computer program product, comprising a set of instructions which, when executed on an apparatus, is configured to cause the apparatus to carry out a method, comprising:
outputting a first set of audio data via one or more loudspeakers;
capturing, via one or more microphones, a real-world audio scene to provide a second set of audio data for output via the one or more loudspeakers;
identifying which of the first set of audio data and at least part of the real-world audio scene has the auditory attention of a user based on a measured neural activity of the user;
generate a noise cancelling signal based on the captured real-world audio scene, wherein;
controlling output of at least some of the first and/or second set of audio data via the one or more loudspeakers based on the identification; and
in response to identifying that the first set of audio data has the auditory attention of the user, controlling comprises enabling or increasing a gain associated with the noise cancelling signal for output to the one or more loudspeakers.
